(19) Europäisches Patentamt
European Patent Office
Office européen des brevets

(11) **EP 1 796 196 A2**

(12) **EUROPÄISCHE PATENTANMELDUNG**

(43) Veröffentlichungstag:
**13.06.2007  Patentblatt 2007/24**

(51) Int Cl.:
*H01M 8/02* (2006.01)

(21) Anmeldenummer: 06025218.6

(22) Anmeldetag: **06.12.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **06.12.2005  DE 102005058350**

(71) Anmelder: **Behr GmbH & Co. KG
70469 Stuttgart (DE)**

(72) Erfinder:
• **Kaiser, Wolfram, Dr.-Ing.
70437 Stuttgart (DE)**
• **Watzlawski, Markus, Dipl.-Ing.
73760 Ostfildern (DE)**

(54) **Bipolarplatte, insbesondere für einen Brennstoffzellenstapel eines Fahrzeugs**

(57)    Die Erfindung beschreibt ein Formteil (2) als Halbschale für eine bipolarplatte (1), aufweisend mindestens eine Öffnung (9, 10), wobei an einem Rand (16) der Öffnung (9) ein Einlegelement (15) angeordnet ist, welches einstückig mit dem Formteil (2) ausgebildet und um mindestens eine parallel zur Öffnungsebene liegende Achse (A) von einer Ausgangslage (I) in eine Endlage (II) bewegbar ist. Des Weiteren werden eine Bipolarplatte (1) mit einem solchen Formteil (2) und ein daraus zusammengesetzter Brennstoffzellenstapel beschrieben.

Fig. 1

**Beschreibung**

Die Erfindung betrifft eine Bipolarplatte, insbesondere für einen Brennstoffzellenstapel eines Fahrzeugs.

Die Umwandlung von chemischer in elektrische Energie mittels Brennstoffzellen stellt eine effiziente und umweltfreundliche Methode zur Gewinnung von elektrischem Strom aus den Elementen Wasserstoff und Sauerstoff dar. Dabei finden oblicherweise zwei räumlich getrennte Elektrodenreaktionen statt, bei denen Elektronen freigesetzt beziehungsweise gebunden werden. Die Reaktanden Sauerstoff und Wasserstoff können in Form verschiedener Fluide bereitgestellt werden, sie müssen nicht zwingend in reiner Form vorliegen. Die Verwendung von reinem, molekularem Sauerstoff und Wasserstoff ist beispielsweise ebenso möglich wie die Verwendung von Luftsauerstoff und Reformat. Ein erstes Beispiel für zwei korrespondierende Elektrodenreaktionen sind folgende Reaktionen:

$$H_2 => 2H^+ + 2e^- \text{ (Anodenreaktion)}$$
$$2H^+ + 2e + \tfrac{1}{2}O_2 => H_2O \text{ (Kathodenreaktion)}$$

Die Art der Reaktion hängt von der Bauart der Brennstoffzelle und von den verwendeten Fluiden ab. Ein zweites Beispiel für zwei korrespondierende Elektrodenreaktionen sind folgende Reaktionen:

$$H_2 + O_2^- => H_2O + 2e^- \text{ (Anodenreaktion A)}$$
$$CO + O_2^- => CO_2 + 2e^- \text{ (Anodenreaktion B)}$$
$$O_2 + 4e^- => 2O_2^- \text{ (Kathodenreaktion)}$$

Allen Brennstoffzellen gemein sind einerseits der Transport einer Ionenart durch einen Elektrolyten und andererseits der parallel verlaufende Transport von Elektronen durch einen äußeren Leiter, um die Ionen nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinander gestapelt und ein solchermaßen gebildeter Stapel als Stromquelle verwendet. Eine einzelne Brennstoffzelle besteht dabei aus einer Elektrolyteinheit wie einer Membran sowie aus zwei mit Katalysatormaterial belegten Elektroden. Die Membran befindet sich trennend zwischen den Reaktanden und weist eine Ionenleitfähigkeit auf, beispielsweise eine $H^+$-Protonenleitfähigkeit oder eine $O_2$-Leitfähigkeit. Die Elektroden sind unter anderem zum Abgriff des von der Brennstoffzelle erzeugten elektrischen Stroms erforderlich.

Die Fluide (auch Reaktionsfluide oder Arbeitsfluide genannt), beispielsweise Wasserstoff und Sauerstoff, und das Reaktionsprodukt Wasser sowie gegebenenfalls ein Fluid (auch Temperier- oder Kühlfluid genannt), das zur Abführung von überschüssiger Reaktionswärme dient, strömen durch Fluidkanäle in die Bereiche der Reaktionszonen hinein und aus ihnen hinaus. Insbesondere bei Verwendung eines wärmeabführenden Fluids wird durch eine thermische Verbindung der jeweiligen Fluidkanäle für einen ausreichenden Wärmeübertrag zwischen den jeweiligen Fluiden gesorgt. Ein Kanalsystem von Fluidkanälen für ein bestimmtes Fluid wird allgemein auch als Flowfield oder Strömungsfeld bezeichnet.

Es sind Brennstoffzellenstapel bekannt, bei denen Kühlkanalsystem und Kathodenkanalsystem vollständig voneinander getrennt sind. Beispielsweise beschreibt die DE 100 15 360 A1 eine Bipolarplatte für Brennstoffzellen, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem (auch Strömungsfeld genannt) für ein Kühlmittel und an den Außenflächen jeder Platte ein Kanalsystem für Gasströme.

Weiterhin sind aus DE 103 31 406 A1 Bipolarplatten mit einem Kühlströmungsfeld in so genannter Eierkartonkonfiguration bekannt.

Beim Einsatz von Bipolarplatten, die aus geprägten Halbschalen hergestellt werden, muss das Kühlfluid aus Zuführungen (auch Ports genannt) in das bipolarplatteninnere Kühlströmungsfeld einschleusbar sein, wobei hier ein möglichst geringer Druckverlust bei der Ein- und Ausschleusung sowie ein möglichst geringer zusätzlicher Platzbedarf bezüglich der Bipolarplattenfläche von Vorteil sind. Weitere wichtige Konstruktionsziele sind eine einfache Montage eines Brennstoffzellenstapels und die zuverlässige Abdichtung der Zellen im Stapel.

Im Stand der Technik werden Bipolarplatten üblicherweise im Bereich der Zuführungen für Anoden- beziehungsweise Kathodengas abgedichtet, indem als Gegenstück und Widerlager zu einer gegenüberliegenden Dichtung ein Einlegelement (auch genannt Inlay) quer über einem oder mehreren Strömungskanälen angeordnet wird. Im einfachsten Fall besteht ein solches Einlegelement aus einem biegesteifen Stück Blech.

Diese herkömmliche Verfahrensweise ist konstruktiv und montagetechnisch aufwendig, da mit Einlegelementen häufig erhebliche Höhen überbrückt werden müssen und zudem eine zuverlässige Positionierung der Einlegelemente bei der Montage erforderlich ist.

Der Erfindung liegt daher die Aufgabe zugrunde, ein Formteil für eine Bipolarplatte sowie eine entsprechende Bipolarplatte und einen Brennstoffzellenstapel mit verbesserter Abdichtung der Fluide gegeneinander und nach außen sowie mit vereinfachter Montage des Brennstoffzellenstapels anzugeben.

Erfindungsgemäß wird die Aufgabe hinsichtlich des Formteils gelöst durch die Merkmalskombination des Anspruchs 1.

Vorteilhafte Weiterbildungen sind Gegenstand der Unteransprüche.

Die Erfindung schlägt ein Formteil mit mindestens einer Öffnung als Zuführung für ein Fluid vor, wobei an einem Rand der Öffnung ein Einlegelement, welches einstückig mit dem Formteil ausgebildet ist, um mindestens eine im wesentlichen parallel zur Öffnungsebene, insbesondere quer oder leicht schräg zur Haupteinströmrichtung liegenden Achse aus der Öffnung heraus bewegbar angeordnet ist. Insbesondere liegt die Achse in der Öffnungsebene. Dabei ist das Einlegelement (auch Klappelement oder Biegeelement genannt) von einer Ausgangslage um die Achse, insbesondere eine Klapp- oder Biegeachse in eine Endlage klapp- bzw. biegbar. Durch eine derartige aus der Öffnung heraus klapp- oder biegbare Anordnung des Einlegelements kann dieses mit hoher Genauigkeit in eine als Dichtlage bezeichnete Endlage auf das Formteil angeordnet werden. Dies bewirkt eine gute Abdichtung in Verbindung mit anliegenden und gegenüberliegenden Dichtungen. Durch die einstückige Anordnung kann das Einlegelement in dieser Dichtlage dauerhaft oder zumindest vorübergehend fixiert werden. Dies ermöglicht eine einfache Montage eines Brennstoffzellenstapels aus Bipolarplatten, die aus derartigen Formteilen zusammengesetzt sind.

In einer bevorzugten Ausgestaltung weist das Einlegelement auf einer dem Rand zugewandten Seite einen Überstand auf. Dieser erlaubt es, das Einlegelement in einem vorgebbaren Abstand von der Biegeachse aus der Öffnung herauszubiegen, so dass es in diesem Abstand vom Rand der Öffnung angeordnet ist. Das Einlegelement wird an seinen Biegestegen dabei im Bereich der Öffnungsebene und im Bereich der Kanalhöhe des Strömungsfelds jeweils um ca. 90°, zusammen um ca. 180° gebogen.

In einer weitergehenden Ausgestaltung ist die Biegeachse schräg zu einer Dichtlage des Einlegelements orientiert. Dadurch kann das Einlegelement in der Öffnung schräg erzeugt werden. Auf diese Weise kann das Einlegelement insbesondere in einer rechteckigen Öffnung eine größere Länge aufweisen als eine zugehörige Randlänge der Öffnung, an welcher das Einlegelement angeordnet ist. Zweckmäßigerweise ist außerdem der Überstand längs der Achse verjüngend ausgebildet, so dass insbesondere die Achse eine Winkelhalbierende zwischen der Längsachse des Einlegelements in dessen Ausgangslage in der Öffnung und in dessen Endlage in der Dichtlage bildet. So kann das Einlegelement auch bei schräger Ausgangslage mit hoher Genauigkeit in eine anders orientierte Dichtlage gebogen und dort dauerhaft oder zumindest vorübergehend fixiert werden.

In einer weiteren Ausführungsform verläuft die zumindest eine Achse in der Öffnungsebene bzw. parallel zu ihr und vorzugsweise quer zur Hauptströmungsrichtung im Einströmbereich eines durch die Öffnung einströmenden Fluids. Zweckmäßigerweise ist dabei die Achse schräg zur Hauptströmungsrichtung des durch die Öffnung einströmenden Fluids angeordnet. Aufgrund einer derartig zur Hauptsströmungsrichtung im Einströmbereich des Fluids leicht verdrehten Biege- oder Klappachse kann das Einlegelement in der Endlage Bereiche überdecken, welche größer, insbesondere breiter als der Einströmbereich sind.

Vorzugsweise ist das Einlegelement in der Endlage über mindestens einen Strömungskanal für ein Fluid anordbar, insbesondere biegbar. Auf diese Weise kann eine Zuführung für das entsprechende Fluid gegenüber anderen Fluiden oder gegenüber dem Außenraum effizient abgedichtet werden.

Dabei ist das Einlegelement vorteilhafterweise über mindestens einen, besonders bevorzugt über mindestens zwei Stege mit dem Formteil verbunden. Die Stege erlauben einerseits ein Ausbiegen des Einlegements vom Rand der Öffnung mit geringem Aufwand und ermöglichen andererseits einen Fluss des jeweiligen Fluids um die Stege herum zu dem mindestens einen Strömungskanal, Dabei wird das Einlegelement endseitig der Biegestege zum einem im Bereich der Öffnungsebene und zum anderen im Bereich der Kanalhöhe des Strömungsfelds jeweils um ca. 90° und zusammen um ca. 180° gebogen.

In einer weitergehenden Ausgestaltung weist das Einlegelement mindestens ein Stützelement, z.B. Noppen, Streben und/oder Stege, auf. Mittels des Stützelements kann die geometrische Höhe des Strömungskanals und somit der Brücke definiert eingestellt werden. Mit anderen Worten: Mittels der Stützelemente wird eine mechanisch steife Brücke geschaffen, deren Überbrückungshöhe durch die Umformtiefe der eingeprägten Stützelemente oder -strukturen vorgegeben wird. Ein solches Stützelement erlaubt durch einen größeren offenen Querschnitt einen vergrößerten Fluss von Fluid zu dem mindestens einen Strömungskanal. Alternativ oder zusätzlich kann das Einlegeelement im Bereich des Überstands hervorstehende Bereiche aufweisen, welche der Abstützung dienen. Eine Kombination von Stützelementen auf dem Einlegelement und auf den Formteilen, insbesondere auf den Bipolarplattenboden ist ebenfalls möglich.

Hierbei ist das Stützelement vorzugsweise einstückig mit dem Einlegelement ausgebildet. Zu diesem Zweck wird das Stützelement vorzugsweise in das Einlegelement geformt. Ein separates Positionieren und Einlegen eines Stützelements ist dann nicht erforderlich. Dies ermöglicht eine genaue und einfache Montage einer Bipolarplatte und eines Brennstoffzellenstapels.

Nach dem Herausbiegen oder Herausklappen des Einlegelements kann dieses in seiner Position, insbesondere in seiner Dichtlage fixiert werden, beispielsweise durch Ankleben, Anlöten, Anschweißen oder durch das Biegewiderstandsmoment der Positionierungsstege, oder in einer anderen vorteilhaften Ausführung. Zusätzlich können der oder die Biegestege im Bereich der Achse von dem Formteil getrennt werden. Dadurch wird ein optimaler Fluss des jeweiligen Fluids von der Zuführung zum Strömungskanal ermöglicht.

Beim erfindungsgemäßen Verfahren zum Herstellen, insbesondere Formen eines Formteils wird die Aufgabe gelöst, indem mindestens eine Öffnung in das Formteil eingebracht, insbesondere gestanzt oder gepresst wird, wobei an einem Rand der Öffnung ein Bereich eines Einlegelementes beim Stanzen oder Pressen ausgespart wird. Im Sinne der Erfindung kann unter dem Begriff Stanzen jedes andere Form- und/oder Trennverfahren wie beispielsweise Schneiden verstanden werden.

Eine erfindungsgemäße Bipolarplatte weist ein Formteil mit einer Kombination der vorgenannten Merkmale auf. Ein erfindungsgemäßer Brennstoffzellenstapel ist zusammengesetzt aus mehreren derartigen Bipolarplatten.

Ausführungsbeispiele der Erfindung werden anhand von Zeichnungen näher erläutert. Darin zeigen:

Fig. 1　einen perspektivisch dargestellten Ausschnitt einer Bipolarplatte mit Einlegelement und Dichtungen,

Fig. 2　einen perspektivisch dargestellten Ausschnitt eines Formteils mit Einlegelement in Ausgangslage,

Fig. 3　den perspektivisch dargestellten Ausschnitt des Formteils bei angedeutetem Umklappen des Einlegelements und

Fig. 4　den perspektivisch dargestellten Ausschnitt des Formteils mit Einlegelement in Dichtlage.

Einander entsprechende Teile sind in allen Figuren mit den gleichen Bezugszeichen versehen.

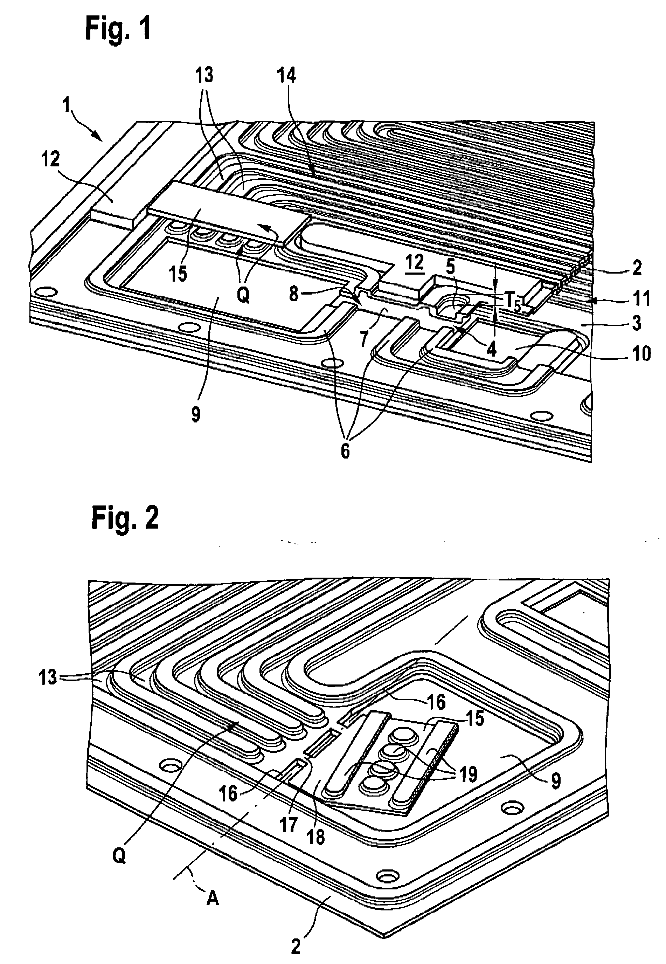

Figur 1 zeigt einen Ausschnitt einer erfindungsgemäßen Bipolarplatte 1, zusammengesetzt aus einem ersten Formteil 2 und einem zweiten Formteil 3. Sie weist, einander gegenüber und zueinander angeordnete, schwebende oder federnde Dichtungsnuten 4 und 5 auf, die durch reduzierte Prägetiefen $T_4$, $T_5$ gekennzeichnet sind und mit ausgeprägten Randstegen 6 versehen sind. Aus den reduzierten Prägetiefen $T_4$, $T_5$ resultiert ein Spalt 7 zwischen den Bodenflächen 8 der Dichtungsnuten 4, 5. Mit anderen Worten ist die Summe der Tiefen $T_4$, $T_5$ der Dichtungsnuten 4, 5 auf beiden Seiten der Bipolarplatte 1 zusammen mit den Wandstärken $D_2$, $D_3$ der Einzelformteile 2, 3 kleiner als die der Gesamthöhe H der Bipolarplatte 1. Die Summe der Tiefen $T_4$, $T_5$ und der Wandstärken $D_2$, $D_3$ liegt um eine Spaltdicke S > 0 unter der Gesamthöhe H gemäß:

$$T_4 + T_5 + D_2 + D_3 + S = H$$

Dabei weist der Spalt 7 eine Spaltdicke von größer 0. bevorzugt von größer 0,3 mm, besonders bevorzugt von 0,3 mm bis 0,6 mm auf. Der Betrag dieser Spaltdicke korrespondiert mit der Durchflusshöhe, mit der das Kühlfluid von einer Zuführung in das Kühlströmungsfeld einströmt. Die Spaltdicke kann auch bis zu einem oder zwei Millimeter betragen.

Die ausgeprägten Randstege 6 dienen der mechanischen Stabilität. Die Außenschenkel der Randstege 6 der beiden Dichtnuten 4, 5 sind zu diesem Zweck entsprechend der Gesamthöhe H der Bipolarplatte 1 gegeneinander abgestützt.

Alternativ oder zusätzlich ist eine lokale Abstützung mit Noppen und/oder anderen Versteifungselementen möglich, die die Spaltdicke S überbrücken und dennoch einen Kühlfluidfluss um die Noppenfläche bzw. Abstützungsfläche bzw. Versteifungsfläche ermöglichen.

Neben einer Öffnung 9 als Reaktionsfluidzuführung ist eine Öffnung 10 als Zuführung für ein Kühlfluid erkennbar, die von einem U-förmigen, dichtgeprägten Rand teilweise umgeben ist. An der offenen Seite verläuft ein Paar einander gegenüberliegender Dichtungsnuten 4, 5 mit Spalt 7 als Strömungskanal für ein Kühlfluid. Das Paar von Dichtungsnuten 4, 5 umgibt die Öffnung 10 vollständig und verläuft außerdem entlang des Umfangs der Bipolarplatte 1 und insbesondere zum Kühlströmungsfeld 11.

Die Reaktionsfluide werden durch Dichtungen 12 in den teilweise um die Öffnung 9 verlaufenden Paaren von Dichtungsnuten 4, 5 gegeneinander und gegenüber dem Außenraum abgedichtet, Im Bereich der beispielhaft abgebildeten Strömungskanäle 13 des Kathodenströmungsfeldes 14 ist ein Einlegelement 15 quer über die Strömungskanäle 13 gelegt. Das Einlegelement 15 stützt sich auf den Strömungskanäle 13 und auf Randstegen 6 der Dichtungsnuten 4, 5 ab und wirkt dabei als Widerlager für eine nicht abgebildete Dichtung der angrenzenden Membran-Elektrolyt-Einheit. Das Einlegelement 15 stößt bündig an die Dichtungen 12.

Das Einlegelement 15 wird nach dem erfindungsgemäßen Verfahren aus einer Ausgangsstellung in der Öffnung 9 in eine Endlage für eine Dichtlage gegenüber einer benachbarten Bipolarplatte 1 bewegt, insbesondere gebogen bzw. geklappt. Stege, welche das Einlegelement 15 einstückig in der Ausgangsstellung mit dem oberen Formteil 2 verbinden, werden und sind in der Endlage abgetrennt.

Eine andere Ausführungsform der erfindungsgemäßen Bipolarplatte 1 kann mit einem Kühlströmungsfeld 11 in Eierkartonkonfiguration versehen sein. Diese Bipolarplatte 1 weist im Bereich der Einströmung in das Kühlströmungsfeld 11 vorteilhafterweise eine lokale Verdickung auf, so dass das Kühlfluid mit konstanter Durchflusshöhe in das Kühlströmungsfeld 11 eingeleitet werden kann. Die Versorgung des Kühlströmungsfeldes 11 mit dem Kühlfluid erfolgt dabei über den als Strömungskanal wirkenden Spalt 7 zwischen den Bodenflächen 8 der anoden- bzw. kathodenseitigen Formteile 2, 3. Die dickste Stelle der Bipolarplatte 1 ist in dieser Ausführungsform vorzugsweise kleiner als oder gleich dick wie die Summe aus Gesamthöhe H der Bipolarplatte 1 im Bereich der aktiven Zellfläche und aus der maximalen Dicke der anliegenden, nicht abgebildeten Membran-Elektrolyt-Einheit ohne Dichtungen.

In Figur 2 ist ein Formteil 2 für eine Bipolarplatte 1 abgebildet, bei dem an einem Rand 16 einer Öffnung 9 ein Einlegelement 15 bezüglich der zu erzielenden Dichtlage in der Endlage schräg angeordnet ist.

In der Figur 2 ist das Einlegelement 15 in seiner Ausgangslage I dargestellt. Das Einlegelement 15 ist einstückig mit dem Formteil 2 ausgebildet, wobei es über zwei Stege 17 mit diesem verbunden ist. Je nach Ausführungsform kann auch lediglich ein Steg 17 als Biege- oder Klappsteg ausreichend sein. Die schräge Ausgangslage I wird neben dem in diesem Bereich hervorstehenden Rand 16 durch einen sich verjüngenden Überstand 18 im Bereich der Stege 17 des Einlegelements 15 erreicht. Diese Anordnung ist durch entsprechendes Ausstanzen oder Ausschneiden der Öffnung 9 aus dem Formteil 2 mit geringem Aufwand herstellbar. Beim Formen des Formteils 2 können in das Einlegelement 15 beispielsweise zudem Stützelemente 19 geformt werden.

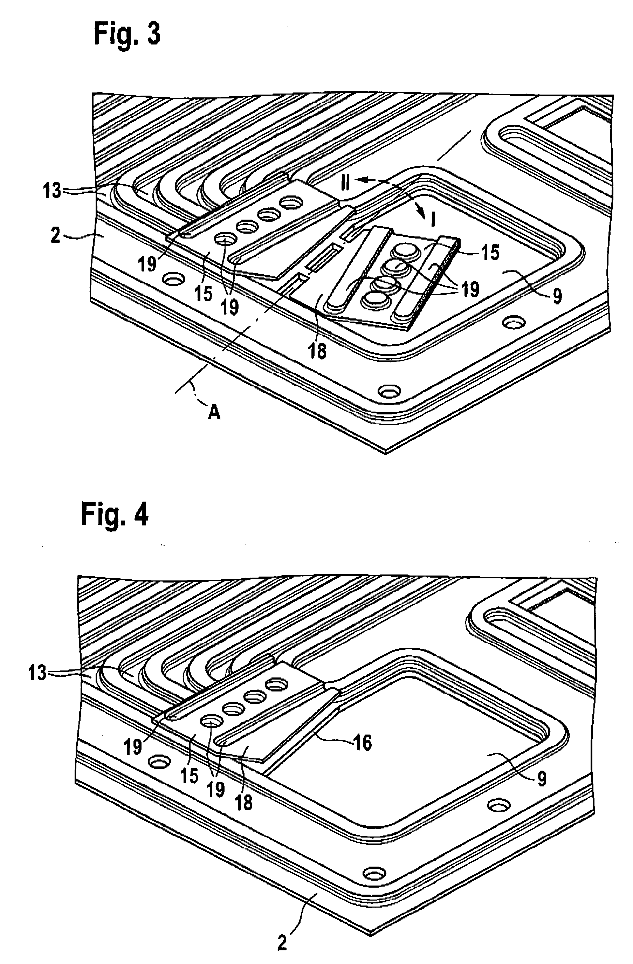

In Figur 3 wird deutlich, wie das Einlegelement 15 um eine mindestens eine Achse A, welche parallel zur Ebene der Öffnung 9 verläuft, mit hoher Präzision aus der Ausgangslage I in der Öffnung 9 heraus in die Endlage II in eine Dichtlage bewegbar, insbesondere bieg- oder klappbar ist.

In einer möglichen Ausführungsform kann das Einlegelement 15 um eine einzelne Achse A gebogen werden, so dass die Stege 17 c- oder u-förmig gebogen sind. Alternativ kann in Abhängigkeit vom verwendeten Material für die Biegestege 17 das Einlegelement 15 endseitig der Biegestege 17 zum einem im Bereich der Öffnungsebene und zum anderen im Bereich der Kanalhöhe des Strömungsfelds 14 jeweils um ca. 90° und zusammen um ca. 180° gebogen werden.

Im abgebildeten Fall ist die Achse A bezüglich der Endlage II und somit der Dichtlage des Einlegelements 15 schräg angeordnet. In Verbindung mit dem Überstand 18 ergibt sich beim Umklappen des Einlegelements 15 die vorgegebene Endlage II mit einer Dichtlage quer zu den Strömungskanälen 13. In der Endlage II ist das Einlegelement 15 von den umgebogenen Stegen 17 fixiert. Durch die schräge Ausgangslage I kann das Einlegelement 15 breiter gestanzt sein als die gesamte Breite der Strömungskanäle 13. Dadurch kann erreicht werden, dass das Einlegelement 15 wie in Figur 1 dargestellt dicht an benachbarten Dichtungen 12 anliegt.

Figur 4 zeigt das Einlegelement 15 zum besseren Verständnis nach dem Abtrennen der Stege 17 in präziser Endlage II mit einer hinreichend guten Dichtlage ohne die in Figur 1 gezeigten umgebenden Dichtungen 12. Sollen die Stege 17 abgetrennt werden, wird dieses üblicherweise erst nach dem Fixieren durch Ankleben, Anschweißen, Anlöten etc. oder nach dem Zusammensetzen oder Verpressen eines Brennstoffzellenstapels aus mehreren Bipolarplatten 1 mit Formteilen 2 und 3 durchgeführt, da sich die Lage des Einlegelements 15 durch den Verpressdruck zu diesem Zeitpunkt nicht mehr ändern kann. Die Stützelemente 19 sind mit den Stegen der Strömungskanäle in Kontakt und stützen das Einlegelement 15 dagegen ab. Dadurch kann es als Widerlager für nicht abgebildete Dichtungen einer angrenzenden Membran-Elektrolyt-Einheit wirken.

## Patentansprüche

1. Formteil (2) als Halbschale für eine Bipolarplatte (1), aufweisend mindestens eine Öffnung (9), wobei an einem Rand (16) der Öffnung (9) ein Einlegelement (15), welches einstückig mit dem Formteil (2) ausgebildet ist, um mindestens eine parallel oder im wesentlichen parallel zur Öffnungsebene der Öffnung (9) liegende Achse (A) bewegbar angeordnet ist.

2. Formteil (2) nach Anspruch 1, **dadurch gekennzeichnet, dass** das Einlegelement (15) auf einer dem Rand (16) zugewandten Seite einen Überstand (18) aufweist.

3. Formteil (2) nach Anspruch 1 oder 2, **dadurch gekennzeichnet, dass** die Achse (A) schräg zu einer Dichtlage des Einlegelements (15) orientiert ist.

4. Formteil (2) nach einem der vorhergehenden Ansprüche, **dadurch gekennzeichnet, dass** das Einfegelement (15) in einer Endlage (11) über mindestens einen Strömungskanal (13) für ein Fluid anordbar ist.

5. Formteil (2) nach einem der vorhergehenden Ansprüche, **dadurch gekennzeichnet, dass** das Einlegefement (15) über mindestens einen Steg (17) mit dem Formteil (2) verbunden ist.

6. Formteil (2) nach einem der vorhergehenden Ansprüche, **dadurch gekennzeichnet, dass** das Einlegelement (15) mindestens ein Stützelement (19) aufweist.

7. Formteil (2) nach Anspruch 6, **dadurch gekennzeichnet, dass** das Stützelement (19) einstückig mit dem Einlegelement (15) ausgebildet ist.

8. Verfahren zum Herstellen eines Formteils (2) als Halbschale für eine Bipolarplatte (1), insbesondere eines Formteils (2) nach einem der vorhergehenden Ansprüche, wobei mindestens eine Öffnung (9) in das Formteil (2) gestanzt wird, an deren Rand (16) ein Bereich eines Einlegelementes (15) beim Stanzen ausgespart wird.

9. Verfahren nach Anspruch 8, **dadurch gekennzeichnet, dass** in das Einlegelement (15) mindestens ein Stützelement (19) geformt wird.

**10.** Verfahren nach Anspruch 8 oder 9, **dadurch gekennzeichnet, dass** das Einlegelement (15) um eine parallel zur Öffnungsebene liegende Achse (A) von einer Ausgangslage (I) in eine Endlage (II) bewegt, insbesondere aus der Öffnung (9) heraus gebogen oder geklappt wird.

**11.** Verfahren nach Anspruch 10, **dadurch gekennzeichnet, dass** das Einlegelement (15) über mindestens einen Strömungskanal (13) für ein Fluid gebogen wird.

**12.** Verfahren nach einem der Ansprüche 8 bis 11, **dadurch gekennzeichnet, dass** das Einlegelement (15) in der Endlage (11), insbesondere nach dem Herausbiegen oder Herausklappen auf dem Formteil (2) durch Kleben, Schweißen, Löten oder ein anderes geeignetes Verfahren fixiert wird.

**13.** Verfahren nach einem der Ansprüche 8 bis 12, **dadurch gekennzeichnet, dass** das Einlegelement (15) in der Endlage (II), insbesondere nach dem Herausbiegen oder Herausklappen im Bereich der Achse (A) von dem Formteil (2) getrennt wird.

**14.** Bipolarplatte (1) für einen Brennstoffzellenstapel, welche ein Formteil (2) nach einem der Ansprüche 1 bis 7 aufweist.

**15.** Brennstoffzellenstapel, zusammengesetzt aus mehreren Bipolarplatten (1) nach Anspruch 14.

## Fig. 1

## Fig. 2

EP 1 796 196 A2

## Fig. 3

13
2
19
15
19
II
I
15
19
18
9
A

## Fig. 4

13
19
15
19
18
16
9
2

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10015360 A1
- DE 10331406 A1